# EUROPEAN PATENT APPLICATION

(11) **EP 4 793 016 A1**
(43) Date of publication of application: **19.08.2026**
(21) Application number: 24877205.5
(22) Date of filing: 09.10.2024
(51) Int. Cl.: B29C 43/52, B29C 33/08, B29C 35/12

(54) **APPARATUS FOR MANUFACTURING MOLDED BODY AND METHOD FOR MANUFACTURING MOLDED BODY**

(30) Priority: 12.10.2023 JP 2023176753
(71) Applicant: micro-AMS Inc., Kawasaki City, Kanagawa 212-0032 (JP)
(72) Inventor: OMACHI, Shunsuke, Kawasaki-shi, Kanagawa 212-0032 (JP); OE, Kazuyoshi, Kawasaki-shi, Kanagawa 212-0032 (JP)
(74) Representative: Pfenning, Meinig & Partner mbB
(86) International application number: PCT/JP2024/036140
(87) International publication number: WO 2025/079610

(57) **Abstract**

An apparatus for manufacturing a molded body, the apparatus including a cavity to be filled with a feedstock; a heating element that is disposed outside the cavity and absorbs electromagnetic waves to generate heat; and an electromagnetic wave generator, in which the apparatus is configured to conduct the heat generated from the heating element to the feedstock in the cavity to perform molding, the cavity includes one or more selected from the group consisting of metal, resin, cement, and gypsum, and a heat insulating material is disposed around a unit including the cavity and the heating element.

## Description

### Technical Field

The present invention relates to an apparatus for manufacturing a molded body and a method for manufacturing a molded body.

Specifically, the present invention relates to an apparatus for manufacturing a molded body and a method for manufacturing a molded body that are capable of suitably handling a feedstock having a high melting point.

### Background Art

As a method for manufacturing a molded body, conventionally, a method such as one described in Patent Literature 1 has been proposed.

Patent Literature 1 describes a method of putting a feedstock into the cavity of a molding die, and then irradiating at least a part of the molding die with electromagnetic waves or disposing at least a part of the molding die in an alternating electric field to mold a molded body in the cavity. Here, the molding die has a heating element outside the cavity, the heating element being configured to generate heat by absorbing the electromagnetic waves or generate heat by being disposed in an alternating electric field. In addition, at least a part between the heating element and the cavity has a transmission amount suppressor that suppresses the amount of transmission of the electromagnetic waves or the alternating electric field into the cavity, or at least a part of the cavity consists of the transmission amount suppressor. Then, the heating element generates heat, and the heat is conducted to the feedstock to perform molding.

### Citation List

### Patent Literature

Patent Literature 1: JP 2022-115434 A

### Summary of Invention

However, in the conventional techniques including Patent Literature 1, there has been found room for further improvement from the viewpoint of suitably handling a feedstock having a high melting point, such as polytetrafluoroethylene (PTFE).

One object of the present invention is to provide an apparatus for manufacturing a molded body and a method for manufacturing a molded body that are capable of suitably handling even a feedstock having a high melting point.

As a result of intensive studies, the present inventors have found that a molded body manufacturing apparatus having a specific configuration can suitably handle even a feedstock having a high melting point, and have completed the present invention.

According to the present invention, the following apparatus for manufacturing a molded body and the like can be provided.
1. An apparatus for manufacturing a molded body, the apparatus including: a cavity to be filled with a feedstock; a heating element that is disposed outside the cavity and absorbs electromagnetic waves to generate heat; and an electromagnetic wave generator, in which the apparatus is configured to conduct the heat generated from the heating element to the feedstock in the cavity to mold the feedstock, the cavity includes one or more selected from the group consisting of metal, resin, cement, and gypsum, and a heat insulating material is disposed around a unit including the cavity and the heating element.
2.The apparatus for manufacturing a molded body according to 1, in which the feedstock is a resin having a melting point of 280°C or higher.
3.The apparatus for manufacturing a molded body according to 1 or 2, in which the cavity, the heating element, and the heat insulating material are housed inside a depressurization bag.
4.The apparatus for manufacturing a molded body according to 1 or 2, the apparatus being configured to mold the feedstock under depressurization.
5.The apparatus for manufacturing a molded body according to 3, the apparatus being configured to mold the feedstock under depressurization.
6. A method for manufacturing a molded body using the apparatus for manufacturing a molded body according to any of 1 to 5.
7. A method for manufacturing a molded body, the method including: filling a cavity with a feedstock; irradiating a heating element that is disposed outside the cavity and absorbs electromagnetic waves to generate heat with electromagnetic waves; and conducting the heat generated from the heating element to the feedstock in the cavity to mold the feedstock, in which the cavity includes one or more selected from the group consisting of metal, resin, cement, and gypsum, and a heat insulating material is disposed around a unit including the cavity and the heating element.
8.The method for manufacturing a molded body according to 7, in which the feedstock is a resin having a melting point of 280°C or higher.
9.The method for manufacturing a molded body according to 7 or 8, in which the cavity, the heating element, and the heat insulating material are housed inside a depressurization bag.
10.The method for manufacturing a molded body according to 7 or 8, in which the feedstock is molded under depressurization.
11.The method for manufacturing a molded body according to 9, in which the feedstock is molded under depressurization.

According to the present invention, it is possible to provide an apparatus for manufacturing a molded body and a method for manufacturing a molded body that are capable of suitably handling even a feedstock having a high melting point.

### Brief Description of Drawings

Fig. 1 is a schematic cross-sectional view illustrating an example of an apparatus for manufacturing a molded body according to one aspect of the present invention.
Fig. 2 is a schematic cross-sectional view illustrating a state in which the inside of a depressurization bag is depressurized in the apparatus for manufacturing a molded body of Fig. 1.
Fig. 3 is a schematic cross-sectional view illustrating another example (modified example 1) of the second mold portion in a cavity.
Fig. 4 is an exploded perspective view illustrating another example (modified example 2) of a cavity.
Fig. 5 is a cross-sectional view illustrating another example (modified example 2) of the cavity.
Fig. 6 is a schematic cross-sectional view illustrating an example of an apparatus for manufacturing a molded body including the cavity of another example (modified example 2).
Fig. 7 is a photograph showing an apparatus for manufacturing a molded body used in Example, showing a state in which a feedstock is filled in the internal space of the cavity.
Fig. 8 is an enlarged photograph showing an apparatus for manufacturing a molded body used in Example, showing a state in which a feedstock is filled in the internal space of the cavity.
Fig. 9 is a photograph showing a molded body obtained in Example.

### Description of Embodiments

Hereinafter, the apparatus for manufacturing a molded body and the method for manufacturing a molded body of the present invention will be described in detail.

In the present specification, "x to y" represents a numerical range of "x or more and y or less". The upper and lower limits described for the numerical range can be arbitrarily combined.

Among individual embodiments of the aspects according to the present invention described below, two or more embodiments that do not contradict each other can be combined, and an embodiment in which two or more embodiments are combined is also an embodiment of the aspect according to the present invention.

An apparatus for manufacturing a molded body according to one aspect of the present invention includes a cavity to be filled with a feedstock; a heating element that is disposed outside the cavity and absorbs electromagnetic waves to generate heat; and an electromagnetic wave generator, in which the apparatus is configured to conduct the heat generated from the heating element to the feedstock in the cavity to perform molding, the cavity includes one or more selected from the group consisting of metal, resin, cement, and gypsum, and a heat insulating material is disposed around a unit including the cavity and the heating element.

According to the apparatus for manufacturing a molded body according to the present aspect, it is possible to obtain an effect of suitably handling even a feedstock having a high melting point.

A method for manufacturing a molded body according to one aspect of the present invention includes filling a cavity with a feedstock; irradiating a heating element that is disposed outside the cavity and absorbs electromagnetic waves to generate heat with electromagnetic waves; and conducting the heat generated from the heating element to the feedstock in the cavity to perform molding, in which the cavity includes one or more selected from the group consisting of metal, resin, cement, and gypsum, and a heat insulating material is disposed around a unit including the cavity and the heating element.

According to the method for manufacturing a molded body according to the present aspect, it is possible to obtain an effect of suitably handling even a feedstock having a high melting point.

In the above description, the phrase "capable of suitably handling even a feedstock having a high melting point" means, for example, that a feedstock having a high melting point can be suitably molded, and that deterioration of the apparatus hardly occurs even when a feedstock having a high melting point is molded (even when molded at a high temperature).

Hereinafter, the present invention will be described in more detail.

### 1. Apparatus for manufacturing molded body

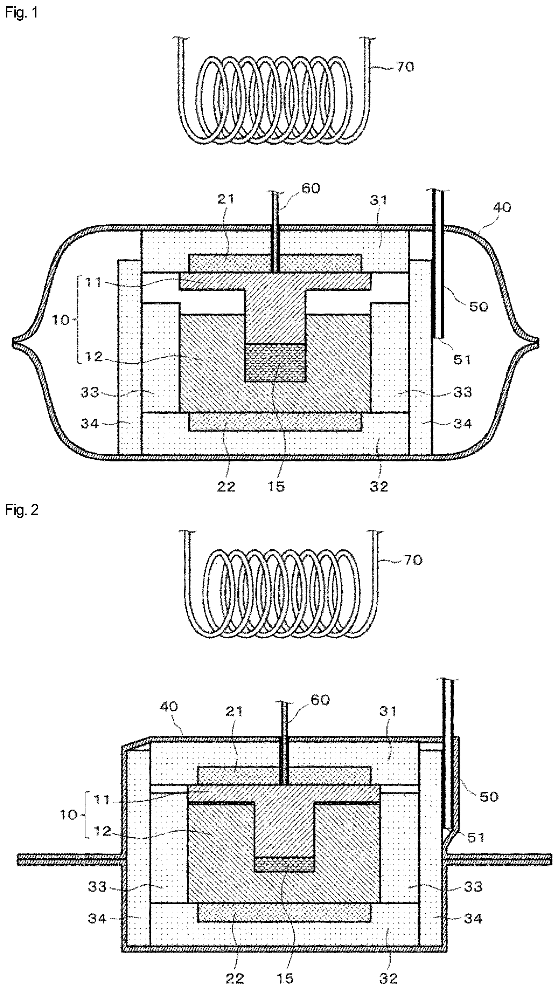

Fig. 1 is a schematic cross-sectional view illustrating an example of an apparatus for manufacturing a molded body according to one aspect of the present invention. This apparatus can be suitably used in the method for manufacturing a molded body according to one aspect of the present invention.

The apparatus for manufacturing a molded body includes a cavity 10; heating elements 21 and 22; heat insulating materials 31, 32, 33, and 34; a depressurization bag 40; a depressurization pipe 50; a temperature measuring device 60; and an electromagnetic wave generator 70. These members are housed inside a housing (not illustrated) configured to shield electromagnetic waves.

### (Cavity)

The cavity 10, which can also be referred to as a molding die, has an internal space 15 to be filled with a feedstock that will be subjected to molding. The feedstock is molded, thereby obtaining a molded body having a shape corresponding to the shape of the internal space 15.

The cavity 10 is divided into a plurality of (two in the example of Fig. 1) members, and is configured by a combination of the first mold portion 11 and the second mold portion 12. In the example of Fig. 1, the internal space 15 for filling a feedstock is formed between the pair of the first mold portion 11 and the second mold portion 12. The internal space 15 in the cavity 10 can be formed, for example, by transferring a master model of a molded body to be molded.

The cavity 10 is configured to be able to change the volume of the internal space 15 surrounded by the plurality of members (here, the first mold portion 11 and the second mold portion 12) constituting the cavity 10 by relative movement of the plurality of members. In order to change the volume of the internal space 15, deformation of the plurality of members themselves (e.g., deformation due to flexibility of each member) is not necessary. By changing the volume of the internal space 15 due to movements of the members without relying on deformation of the members themselves, molding accuracy can be improved.

In the example of Fig. 1, the first mold portion 11 and the second mold portion 12 are configured to be slidable relative to each other. When the first mold portion 11 and the second mold portion 12 slide so as to approach each other, the volume of the internal space 15 decreases.

Here, the first mold portion 11 has a projection, and the second mold portion 12 has a recess. When the projection of the first mold portion 11 and the recess of the second mold portion 12 slide relatively in the depth direction of the recess, the inner side surface of the recess of the second mold portion 12 can guide the movement of the projection of the first mold portion 11.

When the first mold portion 11 and the second mold portion 12 approach each other, the volume of the internal space 15 decreases, and the feedstock in the internal space 15 is pressed between the first mold portion 11 and the second mold portion 12. Thereby, a shape corresponding to the shape of the internal space 15 can be imparted to the feedstock.

The cavity 10 includes one or more selected from the group consisting of metal, resin, cement, and gypsum. Since these materials hardly cause deformation of the member itself, molding accuracy can be improved.

Among these materials, metal is particularly preferable. Since metal has excellent thermal conductivity, it suitably conducts heat from heating elements 21 and 22 described later to the feedstock in the internal space 15 and can suitably perform molding even for the feedstock having a high melting point. In addition, the heat resistance of the cavity 10 can be improved by using metal.

The metal is preferably, for example, one or more selected from the group consisting of aluminum, iron, copper, and alloys containing these metals. The alloy may be an alloy containing any one or more of aluminum, iron, and copper, and examples thereof include brass (copper-zinc alloy).

Examples of the resin include a thermoplastic resin, a thermosetting resin, and a photocurable resin.

In the case where the feedstock is melted to be molded, a thermoplastic resin having a melting point higher than that of the feedstock can be used, and in the case where the feedstock is cured to be molded, a thermoplastic resin having a melting point higher than the temperature at which the feedstock starts to be solidified can be used. As the thermoplastic resin, a thermoplastic resin having a melting point higher than the maximum attained temperature of the cavity 10 during molding can be used. Specific examples of the thermoplastic resin include thermoplastic polyimide and polyamideimide.

Examples of the thermosetting resin include thermosetting polyimide and a silicon resin.

Examples of the photocurable resin include an ultraviolet curable resin containing acrylate, unsaturated polyester, epoxy, vinyl ether, polyene-thiol, or the like as a main component.

When the cavity 10 includes the resin, the cavity 10 may include the resin alone, or may include a resin composition containing the resin and other components. Other components are not particularly limited, and may be a metal (usually having a melting point higher than the temperature during molding) or a nonmetal (usually having a melting point higher than the temperature during molding). These other components may be in a dispersed state in the resin.

As the metal contained in the resin composition, for example, those exemplified as the metal included in the cavity can be used. The metal may be, for example, granular or may be a fibrous material (e.g., a metal fiber such as SUS fiber).

Examples of the nonmetal contained in the resin composition include cement, gypsum, ceramics, carbon, and glass. The nonmetal may be, for example, granular or may be a fibrous material (e.g., carbon fiber and fibrous glass).

Examples of other components contained in the resin composition also include softeners (plasticizers, oils, and the like), antistatic agents, conductive materials, fillers (thermally conductive fillers, metallic fillers, and the like), flame retardants, and sliding property improvers.

The content of the resin in the resin composition is not explicitly limited. For example, 30 mass% or more, 40 mass% or more, 50 mass% or more, 60 mass% or more, 70 mass% or more, 80 mass% or more, 90 mass% or more, 95 mass% or more, or 99 mass% or more of the resin composition may be the resin. In this case, the remainder other than the resin may be one or more selected from the above-mentioned other components.

In the present specification, "resin " is distinguished from" rubber ". That is, the "rubber" means a polymer substance having rubber elasticity at room temperature (25°C) or a material thereof. The "resin" is different from rubber in not having such rubber elasticity. Silicone rubber and fluoro rubber are rubbers and do not correspond to resins.

### (Heating element)

The heating elements 21 and 22 are disposed outside the cavity 10. In the example of Fig. 1, the heating element 21 is disposed on the back side of the first mold portion 11 as viewed from the internal space 15. The heating element 22 is disposed on the back side of the second mold portion 12 as viewed from the internal space 15.

Hereinafter, the description of the heating element 21 can also be applied to the heating element 22.

There is no need to interpose another member between the heating element 21 and the cavity 10. Without interposing another member, heat from the heating element 21 can be suitably conducted to the cavity 10.

The heating element 21 and the cavity 10 may or may not be in contact with each other. In the case where they are not in contact with each other, they are preferably close to each other. The distance between the heating element 21 and the cavity 10 may be, for example, 0 to 50 mm, 0 to 30 mm, or 0 to 10 mm.

As the heating element 21, one that absorbs electromagnetic waves to generate heat can be used.

In one embodiment, the heating element 21 contains one or more components selected from the group consisting of silicon carbide, mullite, and petalite.

In one embodiment, the heating element 21 contains one or more components selected from the group consisting of silicon carbide, mullite, and petalite, and the total content of the one or more components is more than 90 vol%, 91 vol% or more, 92 vol% or more, 93 vol% or more, 94 vol% or more, 95 vol% or more, 96 vol% or more, or 97 vol% or more. The upper limit of the total content is not explicitly limited, and for example, may be substantially 100 vol%, or may be 99 vol% or less. In the case of "substantially 100 vol%", inevitable impurities may be contained.

In one embodiment, the heating element 21 has a silicon carbide content of more than 90 vol%, 91 vol% or more, 92 vol% or more, 93 vol% or more, 94 vol% or more, 95 vol% or more, 96 vol% or more, or 97 vol% or more. The upper limit of the content is not explicitly limited, and for example, may be substantially 100 vol%, or may be 99 vol% or less. In the case of "substantially 100 vol%", inevitable impurities may be contained.

In one embodiment, the heating element 21 contains one or more components selected from the group consisting of silicon carbide, mullite, and petalite, and the total content of the one or more components is 90 mass% or more, 91 mass% or more, 92 mass% or more, 93 mass% or more, 94 mass% or more, 95 mass% or more, 96 mass% or more, or 97 mass% or more. The upper limit of the total content is not explicitly limited, and for example, may be substantially 100 mass%, or may be 99 mass% or less. In the case of "substantially 100 mass%", inevitable impurities may be contained.

In one embodiment, the heating element 21 has a silicon carbide content of 90 mass% or more, 91 mass% or more, 92 mass% or more, 93 mass% or more, 94 mass% or more, 95 mass% or more, 96 mass% or more, or 97 mass% or more. The upper limit of the content is not explicitly limited, and may be, for example, substantially 100 mass% or 99 mass% or less. In the case of "substantially 100 mass%", inevitable impurities may be contained.

As a material of the heating element 21, silicon carbide, mullite, and petalite are suitable, and silicon carbide is particularly suitable. Silicon carbide has a high dielectric loss, thereby absorbing electromagnetic waves to efficiently generate heat, which enables suitable molding even for the feedstock having a high melting point. In addition, silicon carbide can impart excellent heat resistance to the heating element 21.

The heating element 21 preferably has a small total content of rubber and resin, and preferably does not contain any of these. Thereby, the heat resistance of the heating element 21 is more suitably exhibited. The total content of rubber and resin in the heating element 21 may be, for example, 0 to 10 vol%, 0 to 5 vol%, 0 to 3 vol%, 0 to 2 vol%, 0 to 1 vol%, 0 to 0.5 vol%, 0 to 0.3 vol%, 0 to 0.2 vol%, or 0 to 0.1 vol%.

The shape of the heating element 21 is not explicitly limited, and may be, for example, a plate shape or the like.

### (Heat insulating material)

The heat insulating materials 31, 32, 33, and 34 are disposed around a unit including the cavity 10 and the heating elements 21 and 22.

Providing the heat insulating materials 31, 32, 33, and 34 can suppress heat dissipation from the inside (where the unit including the cavity 10 and the heating elements 21 and 22 is disposed) surrounded by these heat insulating materials and promote a temperature rise of the cavity 10. Thereby, molding can be suitably performed even for the feedstock having a high melting point. From this viewpoint, the heat insulating materials 31, 32, 33, and 34 are preferably disposed around the unit including the cavity 10 and the heating elements 21 and 22 in a manner such that the heating elements 21 and 22 are not visible from any angle (preferably, the unit including the cavity 10 and the heating elements 21 and 22 is not visible).

In addition, the heat insulating materials 31, 32, 33, and 34 can prevent the cavity 10 and particularly the heating elements 21 and 22 from coming into contact with the depressurization bag 40 described later, and can suppress deterioration of the depressurization bag 40 due to heat. From this viewpoint, the heat insulating materials 31, 32, 33, and 34 are preferably disposed in a manner such that the depressurization bag 40 and the heating elements 21 and 22 are not in contact with each other. More preferably, the heat insulating materials 31, 32, 33, and 34 are disposed in a manner such that the depressurization bag 40 and the unit including the cavity 10 and the heating elements 21 and 22 are not in contact with each other.

The heat insulating materials 31, 32, 33, and 34 may be disposed on at least a part of the periphery of the unit including the cavity 10 and the heating elements 21 and 22, or may be disposed over the entire periphery of the unit including the cavity 10 and the heating elements 21 and 22 (so as to surround the unit).

The heat insulating materials 31, 32, 33, and 34 and the unit including the cavity 10 and the heating elements 21 and 22 are preferably in contact with each other. In this case, the heat insulating materials 31, 32, 33, and 34 may be in contact with either one or both of the cavity 10 and the heating elements 21 and 22. In the case where the heat insulating materials 31, 32, 33, and 34 and the unit including the cavity 10 and the heating elements 21 and 22 are not in contact with each other, a separation distance therebetween may be 10 cm or less, 5 cm or less, 3 cm or less, 2 cm or less, 1 cm or less, 5 mm or less, 3 mm or less, or 1 mm or less in the shortest part.

The heat insulating materials 31, 32, 33, and 34 each have a plate shape.

The heat insulating material 31 is disposed on the back side of the first mold portion 11 as viewed from the internal space 15. The surface of the heat insulating material 31 on the cavity 10 side is provided with a recess corresponding to the shape of the heating element 21, and the heating element 21 is housed in the recess. The surface of the heating element 21 on the cavity 10 side is exposed from the heat insulating material 31.

The heat insulating material 32 is disposed on the back side of the second mold portion 12 as viewed from the internal space 15. The surface of the heat insulating material 32 on the cavity 10 side is provided with a recess corresponding to the shape of the heating element 22, and the heating element 22 is housed in the recess. The surface of the heating element 22 on the cavity 10 side is exposed from the heat insulating material 32.

The heat insulating material 33 is disposed so as to surround the cavity 10 from the side.

The heat insulating material 34 is disposed so as to surround the entire heat insulating materials 31, 32, and 33 from the side.

Hereinafter, the description of the heat insulating material 31 can also be applied to the heat insulating materials 32, 33, and 34.

The material constituting the heat insulating material 31 is preferably a material capable of exhibiting a heat insulating action and transmitting at least a part of electromagnetic waves generated from the electromagnetic wave generator 70.

The thermal conductivity of the material constituting the heat insulating material 31 preferably satisfies any one or both of the following conditions (A) and (B).

Condition (A): The thermal conductivity measured at 600°C in accordance with JIS A1412-1:2016 is 0.5 W/(m · K) or less.

Condition (B): The thermal conductivity measured at 600°C in accordance with JIS R2616:2001 is 0.5 W/(m · K) or less.

The thermal conductivity measured at 600°C in accordance with JIS A1412-1:2016 may be, for example, 0.1 to 0.5 W/(m · K). The thermal conductivity measured at 600°C in accordance with JIS R2616:2001 may be, for example, 0.1 to 0.5 W/(m · K).

Examples of the material of the heat insulating material 31 include ceramic fibers, refractory bricks, and machinable ceramics.

### (Depressurization bag)

The depressurization bag 40, which is also called a vacuum bag, can maintain the inside of the depressurization bag 40 in a depressurized state (vacuum state) below atmospheric pressure. The depressurization bag 40 can have a function of clamping the cavity 10 and a function of maintaining the inside of the cavity 10 in a depressurized state. The depressurization bag 40 can further have a function of sucking and discharging air in the cavity 10 and gas generated from the feedstock.

The depressurization bag 40 is formed in a bag shape with a sheet material having flexibility.

The depressurization bag 40 has a size capable of housing the cavity 10, the heating elements 21 and 22, and the heat insulating materials 31, 32, 33, and 34 therein.

One end of the depressurization bag 40 can be provided with an opening (illustration omitted) for taking in and out the contents. In order to close the opening of the depressurization bag 40 and seal the inside of the depressurization bag 40, a sealing member such as clip, zipper, zipper fastener, or the like can be used.

The depressurization bag 40 is formed with an insertion port into which the depressurization pipe 50 is inserted, and a peripheral edge of the insertion port is sealed with a sealing material. A tip opening 51 of the depressurization pipe 50 is disposed inside the depressurization bag 40. Here, the tip opening 51 is disposed in a region between the heat insulating material 34 and the depressurization bag 40. The other end (illustration omitted) of the depressurization pipe 50 is connected to a depressurization pump (illustration omitted). The tip opening 51 functions as a suction port for vacuuming performed by the depressurization pump.

As illustrated in Fig. 2, the inside of the depressurization bag 40 is depressurized, and thereby, the volume in the depressurization bag 40 is contracted. Along with this contraction, the inner wall of the depressurization bag 40 presses the first mold portion 11 and the second mold portion 12 constituting the cavity 10 from both sides via the heat insulating material. Thereby, the first mold portion 11 and the second mold portion 12 can be slid so as to be close to each other to decrease the volume of the internal space 15.

### (Temperature measuring device)

The temperature measuring device 60 is provided to be able to measure the temperature of the outer surface of the cavity 10. Here, a hole is provided so as to penetrate through the depressurization bag 40, the heat insulating material 31, and the heating element 21, and a sheath pipe made of alumina is inserted into the hole. The sheath pipe is disposed so as to be in contact with the outer surface of the cavity 10. The temperature measuring device 60 is configured to be able to continuously measure the temperature of the outer surface of the cavity 10 by inserting a fiber optic thermometer into the sheath pipe. The hole in the depressurization bag 40 is sealed with a sealing material so that sealability in the depressurization bag 40 is maintained.

### (Electromagnetic wave generator)

The electromagnetic wave generator 70 is preferably capable of generating electromagnetic waves including a wavelength region of 0.01 to 100 m. That is, the wavelength region of the generated electromagnetic waves is preferably included in the range of 0.01 to 100 m. In this wavelength region, absorption of the electromagnetic waves by the heat insulating materials 31, 32, 33, and 34 can be suppressed, and heat can be efficiently generated from the heating elements 21 and 22.

The electromagnetic wave generator 70 is preferably capable of generating electromagnetic waves including a wavelength region of 0.01 to 1 m (microwaves) or electromagnetic waves including a wavelength region of 1 to 100 m (high-frequency waves). In the case of generating microwaves, the electromagnetic wave generator 70 may be a microwave oscillator. In the case of generating high-frequency waves, the electromagnetic wave generator 70 may be a high-frequency oscillator.

### 2.Method for manufacturing molded body

An example of a method for manufacturing a molded body using the above-described apparatus for manufacturing a molded body will be described.

First, the internal space 15 in the cavity 10 is filled with a feedstock.

Next, the heating elements 21 and 22 and the heat insulating materials 31, 32, 33, and 34 are disposed outside the cavity 10.

Next, the cavity 10, the heating elements 21 and 22, and the heat insulating materials 31, 32, 33, and 34 are housed in the depressurization bag 40, and the opening of the depressurization bag 40 is sealed.

As described above, the state illustrated in Fig. 1 is formed.

Next, the heating elements 21 and 22 are irradiated with electromagnetic waves from the electromagnetic wave generator 70, and also a depressurization pump is driven to depressurize the inside of the depressurization bag 40 (to make the pressure below atmospheric pressure).

Next, heat generated from the heating elements 21 and 22 is conducted to the feedstock in the cavity 10 to perform molding. Thereby, the feedstock in the cavity 10 is molded under depressurization.

As described above, a molded body is obtained.

By irradiating the heating elements 21 and 22 with electromagnetic waves from the electromagnetic wave generator 70, heat generated from the heating elements 21 and 22 is conducted to the feedstock in the cavity 10, and the feedstock can be melted or cured. In addition, by driving the depressurization pump to depressurize the inside of the depressurization bag 40 (to make the pressure below atmospheric pressure), the feedstock is melted or cured under depressurization to obtain a molded body having a shape corresponding to the shape of the internal space 15.

In addition, even if air is present in the feedstock (gap in the feedstock) before depressurization, the air can be removed by depressurization. Even if there is a space in the feedstock (gap in the feedstock) under depressurization, this space is evacuated (brought into a state close to vacuum), so that this space can be substantially lost when the feedstock is melted. Thereby, formation of voids inside the molded body can be prevented.

Here, performing depressurization allows the first mold portion 11 and the second mold portion 12 constituting the cavity 10 to slide so as to be close to each other, and thus decreasing the volume of the internal space 15 (clamping the cavity 10). Thereby, formation of voids inside the molded body is prevented even when a granular or flaky feedstock is used. Furthermore, air in the cavity 10 and gas generated from the feedstock are sucked and discharged by depressurization in the depressurization bag 40. This also contributes to prevention of formation of voids inside the molded body.

In the molding, irradiation conditions of electromagnetic waves can be controlled based on the temperature measured by the temperature measuring device 60.

For example, irradiation conditions of electromagnetic waves can be controlled in a manner such that the temperature measured by the temperature measuring device 60 rises at a predetermined rate of temperature rise. The rate of temperature rise is not explicitly limited, and may be appropriately set depending on the kind of the feedstock and the like, but may be, for example, 1 to 30°C/min.

It is also possible, for example, to perform control such as terminating irradiation of electromagnetic waves after confirming that the temperature measured by the temperature measuring device 60 becomes equal to or higher than the melting point of the feedstock or becomes equal to or higher than the curing temperature of the feedstock.

In one embodiment, after irradiation of electromagnetic waves is finished, the cavity 10 (and the feedstock molded in the internal space 15) is cooled while the inside of the depressurization bag 40 is kept depressurized. This prevents generation of voids (pores) inside the molded body and formation of unintended irregularities on the surface of the molded body.

The cooling method is not explicitly limited, and may be leaving in the atmosphere, or may be using a cooling device in order to promote cooling. The cooling device is not explicitly limited, and examples thereof include a fan and a water jacket.

### (Feedstock)

The feedstock is not particularly limited as long as it contains a substance that melts or cures by heat generated from the heating element (preferably contains such a substance as a main component).

In one embodiment, the feedstock contains one or more selected from the group consisting of a thermoplastic resin, a thermosetting resin, a low-melting-point metal, and a low-melting-point nonmetal. Preferably, the feedstock contains one or more kinds of the above as a main component.

Here, the "main component" means that the content is 50 mass% or more. This content is preferably 65 mass% or more, more preferably 80 mass% or more, more preferably 95 mass% or more, and still more preferably substantially 100 mass%. In the case of "substantially 100 mass%", inevitable impurities may be contained.

Examples of the thermoplastic resin that can be used as the feedstock include rubber-reinforced styrene-based resins such as ABS resins (acrylonitrile-butadiene-styrene resins), ASA resins (acrylate-styrene-acrylonitrile resins), and AES resins (acrylonitrile-ethylene-propylene-diene-styrene resins); styrene-based resins such as polystyrene, styrene-acrylonitrile copolymers, styrene-maleic anhydride copolymers, and (meth)acrylate ester-styrene copolymers; olefin-based resins such as polyethylene and polypropylene; acryl-based resins; polycarbonate resins; polyester-based resins such as PBT resins (polybutylene terephthalate resins); polyamide-based resins such as methaxylylenediamine polyamide resins; vinyl chloride-based resins; polyarylate resins; polyacetal resins; polyphenylene ether resins; PPS resins (polyphenylene sulfide resins); fluororesins; imide-based resins; ketone-based resins such as PEEK resins (polyether ether ketone resins); sulfone-based resins; urethane-based resins; polyvinyl acetate; polyethylene oxide; polyvinyl alcohol; polyvinyl ether; polyvinyl butyral; phenoxy resins; photosensitive resins; liquid crystal polymers; biodegradable plastics; and soft resins (elastomer resins).

The thermoplastic resin may also be a thermoplastic elastomer (styrene-based, olefin-based, vinyl chloride-based, vinyl acetate-based, urethane-based, polyester-based, or the like).

Particularly according to the present invention, molding can be suitably performed for not only a simple shape such as a plate but also a three-dimensional stereoscopic shape (a non-simple shape such as a product part) even when a fluororesin having high molding difficulty, specifically, polytetrafluoroethylene (PTFE) is used as the feedstock. Such an effect is hardly obtained by other methods such as injection molding or conventional techniques including Patent Literature 1.

In addition, particularly according to the present invention, molding can be suitably performed without adding a processing aid to the feedstock even when a fluororesin having high molding difficulty, specifically, polytetrafluoroethylene (PTFE) is used as the feedstock. Such an effect is also hardly obtained by other methods such as injection molding or conventional techniques including Patent Literature 1.

Examples of the processing aid include those conventionally used as a processing aid for molding PTFE, and specific examples thereof include aliphatic or aromatic hydrocarbon alcohols such as solvent naphtha, white oil, petroleum ether, isopropyl alcohol, liquid paraffin, ethylene glycol, glycerin, butylpentyl phthalate, and polyalkyldalicol.

In one embodiment, the content of the processing aid in the feedstock is 1 mass% or less, 0.5 mass% or less, 0.1 mass% or less, 0.05 mass% or less, 0.01 mass% or less, or 0 mass%.

In one embodiment, 80 mass% or more, 90 mass% or more, 95 mass% or more, 97 mass% or more, 99 mass% or more, 99.5 mass% or more, 99.7 mass% or more, 99.9 mass% or more, or substantially 100 mass% of the feedstock is a thermoplastic resin, preferably a fluororesin, and more preferably polytetrafluoroethylene (PTFE). In the case of "substantially 100 mass%", inevitable impurities may be contained.

When a thermoplastic resin is used as the feedstock, the feedstock is melted in the cavity by heat generated by the heating element.

When a thermoplastic resin is used as the feedstock, a granular or flaky thermoplastic resin may be used. In this case, the average particle size is preferably 0.2 to 5 mm, and more preferably 0.5 to 3 mm. As the feedstock, a powder having an average particle size of less than 0.2 mm may also be used. It should be noted that the average particle size means D₅₀ determined from a weight-based particle size distribution determined by sieving.

As the feedstock, a preform including a thermoplastic resin can be used. The preform is formed into a three-dimensional shape by some method using a thermoplastic resin, and examples thereof include those layered in a three-dimensional shape by a layered manufacturing method. Here, examples of the layered manufacturing method include a method using various 3D printers (AM: Additive Manufacturing) in which a thermoplastic resin discharged in a thread-like (linear) form or a granular form from a nozzle is layered in a three-dimensional shape, Fused Deposition Modeling (FDM)(Material Extrusion), an extrusion molding method, an inkjet method, a granular material bonding method.

Examples of the thermosetting resin that can be used as the feedstock include phenol resins, epoxy resins, melamine resins, urea resins, unsaturated polyester resins, alkyd resins, polyurethanes, and thermosetting polyimides.

When a thermosetting resin is used as the feedstock, the feedstock is cured by heat generated by the heating element to form a molded body in the manufacturing method of the present invention.

Examples of the low-melting-point metal that can be used as the feedstock include alloys containing zinc, indium, gallium, tin, bismuth, lead, or the like as a main component.

When the low-melting-point metal is used as the feedstock, the feedstock is melted by heat generated by the heating element in the manufacturing method of the present invention.

Examples of the low-melting-point nonmetal that can be used as the feedstock include glass.

When the low-melting-point nonmetal is used as the feedstock, the feedstock is melted by heat generated by the heating element in the manufacturing method of the present invention.

The feedstock may contain, as a main component, a substance such as at least one selected from the group consisting of a thermoplastic resin, a thermosetting resin, a low-melting-point metal, and a low-melting-point nonmetal, which is melted or cured by heat generated by the heating element and transferred into the cavity via a transmission amount suppressor or the like, and the feedstock may contain, as other components, a high-melting-point metal, a high-melting-point nonmetal (ceramics or the like), a UV curable resin, a fibrous material (carbon fiber (CF), glass fiber(GF), metal fiber (SUS fiber or the like), fibrous glass or the like), a softening agent (plasticizer, oil, or the like), a coloring agent (pigment or the like), an impact resistance modifier (rubber component or the like), an antistatic agent, a conductive material, a filler (thermally conductive filler, metallic filler, or the like), a flame retardant, a heat resistant resin, a low heat-storage resin, a sliding property improver, and the like.

In one embodiment, the feedstock contains a resin having a melting point of 280°C or higher. When such a resin having a high melting point is melted to be molded in the cavity 10, the effect of the present invention is more remarkably exhibited.

### (Modified example 1 of cavity)

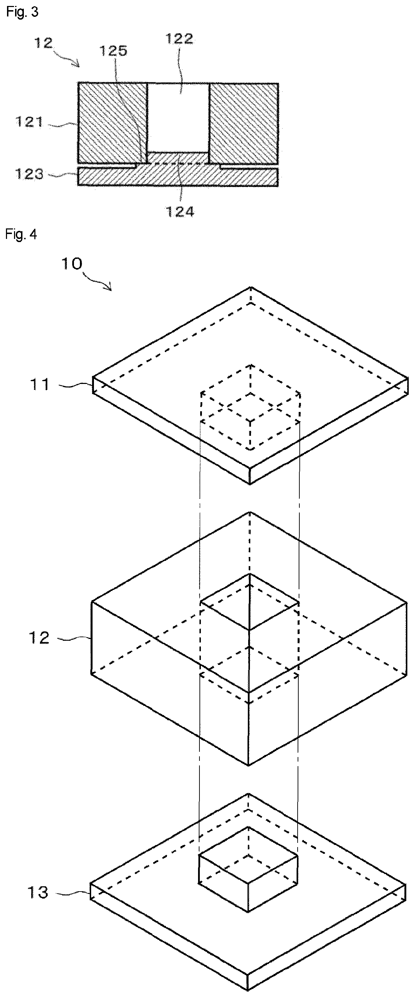

Next, another example of the second mold portion 12 in the cavity 10 will be described with reference to Fig. 3.

The second mold portion 12 illustrated in Fig. 3 includes a first member 121 and a second member 123.

The first member 121 is provided with a through hole 122. The through hole 122 forms the inner side surface of the recess of the second mold portion 12.

The second member 123 is formed in a plate shape and is provided with a projection 124 on one main surface thereof. The projection 124 is inserted into one side (lower side in Fig. 3) of the through hole 122 and forms the bottom surface of the recess of the second mold portion 12.

The second mold portion 12 is formed by a combination of the first member 121 and the second member 123. The cavity 10 can be formed by combining this second mold portion 12 with the first mold portion 11 illustrated in Fig. 1.

The first member 121 and the second member 123 are integrally fixed vertically with bolts not illustrated. After molding, the bolts are removed to separate the first member 121 and the second member 123, so that a molded body present in the through hole 122 (corresponding to the internal space 15 of the cavity 10) can be easily taken out.

Here, as illustrated in Fig. 3, it is preferable that a stepped part 125 having a height higher than the level of one main surface of the second member 123 and lower than the level of the projection 124 is provided so as to surround the outer periphery of the base end part of the projection 124 in the second member 123. The upper surface of the stepped part 125 is formed in parallel with the lower surface of the first member 121, and these are disposed so as to be in surface contact with each other.

Providing such a stepped part 125 reduces the contact area (contact area between the upper surface of the stepped part 125 and the lower surface of the first member 121) and can increase the contact surface pressure, as compared with the case where the stepped part 125 is not provided (that is, the case where the entire surface other than the projection 124 on one main surface of the second member 123 is in surface contact with the lower surface of the first member 121). Thereby, it is possible to suitably prevent the feedstock from leaking from the end of the bottom surface of the recess of the second mold portion 12 during molding.

When such a stepped part 125 is provided, the second mold portion 12 or the cavity 10 preferably includes metal. Even if the area of the contact surface between the first member 121 and the second member 123 is small, heat generated from the heating element 22 can be efficiently conducted to the feedstock due to high thermal conductivity of metal. Therefore, a feedstock having a high melting point can be suitably molded.

The above description has mainly described the case where the projection of the first mold portion 11 and the recess of the second mold portion 12 slide relatively in the depth direction of the recess in the cavity 10, but the movement of the cavity 10 is not limited thereto. In another example not illustrated, the cavity is configured by a plurality of (the number is not limited to two, and may be three or more) mold portions, and one or more of the plurality of mold portions can move arbitrarily, thereby decreasing the volume of the internal space of the cavity. The movement of a mold portion can be guided by another mold portion or a member (guide member) other than the mold portion. The movement of the mold portion may be linear or non-linear (e.g., movement along a curve line or a polygonal line, or a track obtained by combining these lines). In addition, the plurality of mold portions may include one or more mold portions that do not move.

In the case where the volume of the internal space of the cavity is decreased by moving the plurality of mold portions, the moving direction of each mold portion can be arbitrarily set, and the plurality of mold portions can also be moved in multiple directions. "Moving the plurality of mold portions in multiple directions " may be that there are one or more sets of combinations of mold portions whose moving directions are not parallel to each other in the plurality of mold portions constituting the cavity. The plurality of mold portions can be suitably moved in multiple directions by utilizing the contraction of the depressurization bag. Thereby, a shape that is difficult to realize by a molding method such as vacuum pressing can be imparted to a molded body.

The above description has mainly described the case where the apparatus for manufacturing a molded body has the depressurization bag, but the present invention is not limited thereto. For example, an arbitrary member for clamping the cavity may be used instead of the depressurization bag. Even when such a member is used, having the heat insulating material in the apparatus for manufacturing a molded body can suppress deterioration of the member due to heat. Therefore, even when a feedstock having a high melting point is molded (even molded at a high temperature), an effect that the apparatus hardly deteriorates can be obtained. However, it is particularly preferable that the apparatus for manufacturing a molded body has the depressurization bag.

### (Modified example 2 of cavity)

Next, a further modified example (modified example 2) of the cavity 10 will be described with reference to Figs. 4 to 6.

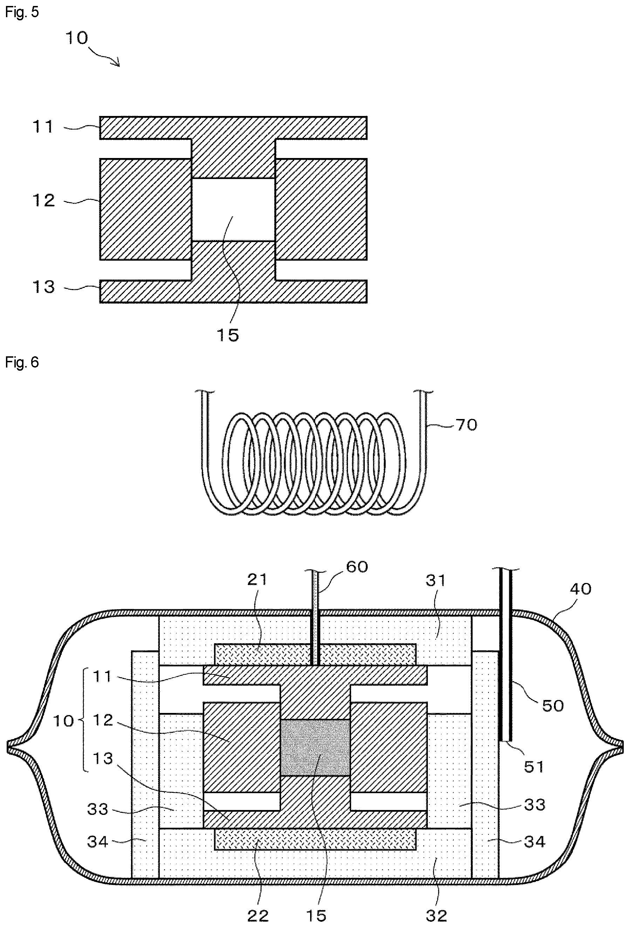

Fig. 4 is an exploded perspective view illustrating another example (modified example 2) of the cavity, and Fig. 5 is a cross-sectional view of the cavity 10 according to modified example 2. Fig. 6 is a schematic cross-sectional view illustrating an example of an apparatus for manufacturing a molded body including the cavity 10 according to modified example 2. In Figs. 4 to 6, the same reference numerals as those in Figs. 1 to 3 denote the same configurations unless otherwise specified.

In modified example 2, the cavity 10 is configured to be able to change the volume of the internal space 15 surrounded by a plurality of members (here, a first mold portion 11, a second mold portion 12, and a third mold portion 13) constituting the cavity 10 by relative movement of the plurality of members.

In the examples of Figs. 1 and 2, the first mold portion 11 and the second mold portion 12 are configured to be slidable relative to each other, but in modified example 2, the second mold portion 12 and the third mold portion 13 are also configured to be slidable relative to each other.

That is, the first mold portion 11 and the third mold portion 13 each have a projection, and the second mold portion 12 has a through hole. The projection of the first mold portion 11 is slidably inserted into the through hole from one side of the second mold portion 12, and the projection of the third mold portion 13 is slidably inserted into the through hole from the other side of the second mold portion 12. The inner side surface of the through hole of the second mold portion 12 can guide the movement of the projections of the first mold portion 11 and the third mold portion 13.

When the first mold portion 11, the second mold portion 12, and the third mold portion 13 slide so as to approach each other, the volume of the internal space 15 decreases. With the decreasing of the volume, a feedstock in the internal space 15 is pressed. Thereby, a shape corresponding to the shape of the internal space 15 can be imparted to the feedstock. At this time, in modified example 2, it is possible to obtain an effect of easily setting the decrease amount in the volume (compression amount of the feedstock) to be large since the number of slidable members (mold portions) is larger than that in the examples of Figs. 1 and 2.

### (Example)

Hereinafter, an example of manufacturing a molded body using an apparatus for manufacturing a molded body illustrated in Fig. 1, in which the cavity 10 includes metal (specifically, aluminum), will be described.

Polytetrafluoroethylene (PTFE) was used as a feedstock, and the internal space 15 in the cavity 10 was initially filled with the feedstock.

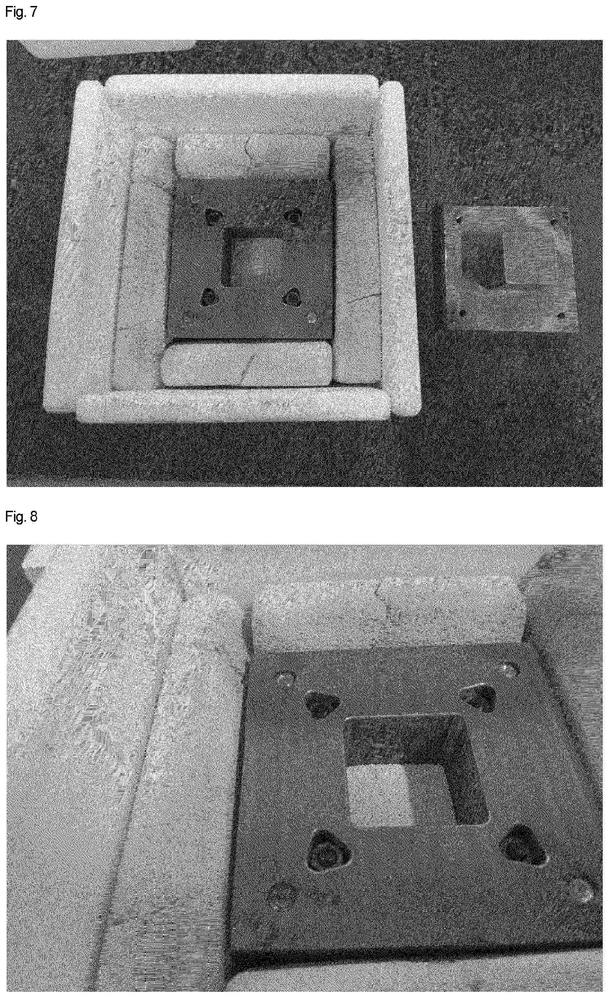

Next, the heating elements 21 and 22 and the heat insulating materials 31, 32, 33, and 34 were disposed outside the cavity 10. A photograph of this state is shown in Fig. 7, and an enlarged photograph thereof is shown in Fig. 8. Figs. 7 and 8 show a state in which the first mold portion 11, the heating element 21, and the heat insulating material 31 are removed in order to show a state in which the internal space of the cavity is filled with the feedstock.

The cavity, the heating elements, and the heat insulating materials were housed in the depressurization bag 40, and the opening of the depressurization bag 40 was sealed to form the state shown in Fig. 1.

Next, the heating elements 21 and 22 were irradiated with electromagnetic waves from the electromagnetic wave generator 70, and also a depressurization pump was driven to depressurize the inside of the depressurization bag 40.

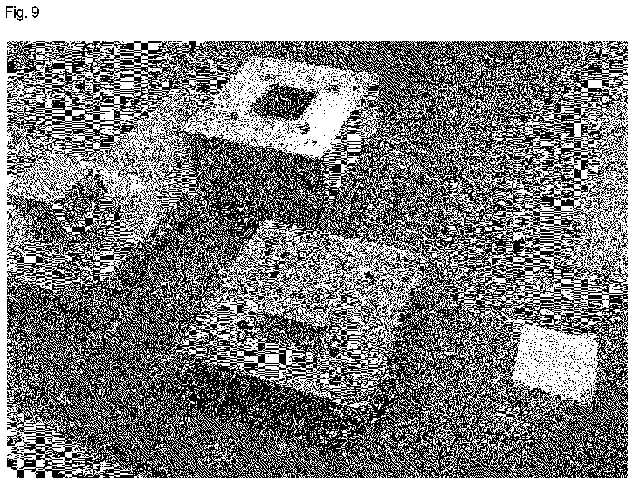

As a result, PTFE was melted and molded in the internal space 15, and a target PTFE molded body was obtained satisfactorily. Fig. 9 shows a photograph of the molded body obtained in Example.

### (Comparative Example)

Hereinafter, an example of manufacturing a molded body using an apparatus for manufacturing a molded body illustrated in Fig. 1, in which the cavity 10 includes silicone rubber, will be described.

Polytetrafluoroethylene (PTFE) was used as a feedstock, and the internal space 15 in the cavity 10 was initially filled with the feedstock.

Next, the heating elements 21 and 22 and the heat insulating materials 31, 32, 33, and 34 were disposed outside the cavity 10 and housed in the depressurization bag 40, and the opening of the depressurization bag 40 was sealed to form the state shown in Fig. 1.

Next, the heating elements 21 and 22 were irradiated with electromagnetic waves from the electromagnetic wave generator 70, and also a depressurization pump was driven to depressurize the inside of the depressurization bag 40.

As a result, the cavity 10 deformed or deteriorated due to insufficient heat resistance of the silicone rubber, and therefore a molded body in which the feedstock is molded could not be obtained.

Although several embodiments and/or examples of the present invention have been described in detail above, those skilled in the art can easily make many modifications to these illustrative embodiments and/or examples without departing substantially from the novel teachings and effects of the present invention. Therefore, many of these modifications fall within the scope of the present invention.

The literature described in this specification and the content of the application on which priority under the Paris Convention of this application is based are incorporated in their entirety.

### Reference Signs List

- 10: Cavity
- 11: First mold portion
- 12: Second mold portion
- 121: First member
- 122: Through hole
- 123: Second member
- 124: Projection
- 125: Stepped part
- 15: Internal space
- 21, 22: Heating element
- 31, 32, 33, 34: heat insulating material
- 40: Depressurization bag
- 50: Depressurization pipe
- 51: Tip opening
- 60: Temperature measuring device
- 70: Electromagnetic wave generator

## Claims

1. An apparatus for manufacturing a molded body, the apparatus comprising:
a cavity to be filled with a feedstock;
a heating element that is disposed outside the cavity and absorbs electromagnetic waves to generate heat; and
an electromagnetic wave generator, wherein
the apparatus is configured to conduct the heat generated from the heating element to the feedstock in the cavity to mold the feedstock,
the cavity includes one or more selected from the group consisting of metal, resin, cement, and gypsum, and
a heat insulating material is disposed around a unit including the cavity and the heating element.

2. The apparatus for manufacturing a molded body according to claim 1, wherein the feedstock is a resin having a melting point of 280°C or higher.

3. The apparatus for manufacturing a molded body according to claim 1 or 2, wherein the cavity, the heating element, and the heat insulating material are housed inside a depressurization bag.

4. The apparatus for manufacturing a molded body according to claim 1 or 2, the apparatus being configured to mold the feedstock under depressurization.

5. The apparatus for manufacturing a molded body according to claim 3, the apparatus being configured to mold the feedstock under depressurization.

6. A method for manufacturing a molded body using the apparatus for manufacturing a molded body according to any of claims 1 to 5.

7. A method for manufacturing a molded body, the method comprising:
filling a cavity with a feedstock;
irradiating a heating element that is disposed outside the cavity and absorbs electromagnetic waves to generate heat with electromagnetic waves; and
conducting the heat generated from the heating element to the feedstock in the cavity to mold the feedstock, wherein
the cavity includes one or more selected from the group consisting of metal, resin, cement, and gypsum, and
a heat insulating material is disposed around a unit including the cavity and the heating element.

8. The method for manufacturing a molded body according to claim 7, wherein the feedstock is a resin having a melting point of 280°C or higher.

9. The method for manufacturing a molded body according to claim 7 or 8, wherein the cavity, the heating element, and the heat insulating material are housed inside a depressurization bag.

10. The method for manufacturing a molded body according to claim 7 or 8, wherein the feedstock is molded under depressurization.

11. The method for manufacturing a molded body according to claim 9, wherein the feedstock is molded under depressurization.
